(19) **Europäisches Patentamt / European Patent Office / Office européen des brevets**

(11) **EP 4 583 015 A1**

(12) **EUROPEAN PATENT APPLICATION**
published in accordance with Art. 153(4) EPC

(43) Date of publication:
**09.07.2025 Bulletin 2025/28**

(21) Application number: **22957365.4**

(22) Date of filing: **30.08.2022**

(51) International Patent Classification (IPC):
***G06N 20/00*** (2019.01)

(52) Cooperative Patent Classification (CPC):
**G06N 20/00**

(86) International application number:
**PCT/JP2022/032665**

(87) International publication number:
**WO 2024/047766 (07.03.2024 Gazette 2024/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventors:
- **PIAO, Bin**
  **Kawasaki-shi, Kanagawa 211-8588 (JP)**
- **NARITA, Kenichiroh**
  **Kawasaki-shi, Kanagawa 211-8588 (JP)**
- **FUKUDA, Takasaburo**
  **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **BIAS EVALUATION PROGRAM, BIAS EVALUATION METHOD, AND BIAS EVALUATION DEVICE**

(57) A program including instructions causing a computer to execute: classifying a plurality of pieces of data into a plurality of groups, based on a first attribute of multiple attributes included in each of the plurality of pieces of data; comparing a positive example rate of data included in a first group of the plurality of groups with a positive example rate of specific data in which a value of a second attribute of the multiple attributes in data included in a second group of the plurality of groups is included in a range according to a distribution of the value of the second attribute of the data included in the first group; and executing bias evaluation on data based on comparison between other groups other than the second group of the plurality of groups and the first group, based on a result of the comparing processing.

FIG. 7

EP 4 583 015 A1

## Description

FIELD

The present invention relates to a bias evaluation program, a bias evaluation method, and a bias evaluation device.

BACKGROUND

In social life, social decisions are made to individuals in various situations such as education, employment, loans, or contracts. Entities that make this social decision vary and, for example, include schools, companies, or the like. Moreover, each person to be a target of the social decision has various attributes such as age, gender, or race.

In recent years, it has been regarded as important to ensure fairness for an organization or an individual that plays a role for making such a social decision on each individual. The fairness is, for example, a criterion of whether or not a determination is made without being affected by an attribute that is actually irrelevant in a decision among various attributes of a certain person, when the social decision is made for the person. A person who makes a social decision can obtain social trust, expectations for future growth, or the like, by ensuring such fairness.

Therefore, a company or the like that makes a social decision is required to determine whether or not fairness for its decision is ensured. For such a fairness problem, a privileged attribute to be typically determined is roughly determined. Then, when fairness regarding a certain social decision is ensured, bias evaluation for evaluating whether or not fairness is ensured regarding a specific privileged attribute is performed. A bias indicates deflection according to the privileged attribute or the like. That is, in the bias evaluation, when a social decision is made, it is evaluated how much deflection exists in the social decision for a specific privileged attribute. The bias evaluation may be referred to as detection of fairness issues.

For example, when a company employs an employee, it is important that fairness such as employment with no bias is ensured. Therefore, the company performs bias evaluation on the employment of the employees, in a case where it is confirmed that the bias exists, that is, the fairness is not ensured, the company performs adjustment for the employment of the employees according to the attribute or the like, in order to ensure fairness in employment. For example, in a case where bias evaluation is performed using gender as a privileged attribute and a lower employment rate of males than females in the employment of the employees is detected, it is desirable for the company to take measures such as increasing the number of women to be employed.

Moreover, in recent years, in order to quickly and reliably execute such bias evaluation, it has been studied to use Artificial Intelligence (AI) for bias evaluation on a social decision made by a company or the like.

For example, in a case where a bias evaluation device using typical AI performs bias evaluation for the specific privileged attribute, the bias evaluation device sets a group of persons having the specific privileged attribute as a privileged group and sets a group of persons who does not have the privileged attribute as an unprivileged group. Then, the bias evaluation device compares the privileged group and the unprivileged group and evaluates a difference according to a bias between these two groups. In this way, the typical bias evaluation device generally performs bias evaluation by shaping the bias evaluation into a binarization problem.

However, in the real world, the fairness is often determined between two or more groups. For example, regarding the age, grouping into younger age, middle age, and older age can be performed, and regarding the race, grouping into Asian, Caucasian, and Black, or the like can be performed. Moreover, an intersection of the privileged attribute such as a combination of the race and the age can be conceivable, and in that case, a group to be a target of fairness issue detection becomes more complicated. Therefore, in a case of the fairness issue detection between a plurality of groups, the typical bias evaluation device compares a target group to be a fairness determination target and a non-target group other than that and performs verification of a bias.

Note that, as a technique regarding the bias evaluation, a technique has been proposed for obtaining a result of removal of a bias source while changing a dataset and determining a privileged group and an unprivileged group for a privileged attribute having continuous values from the result of the removal of the bias source.

SUMMARY

TECHNICAL PROBLEM

However, in a typical bias evaluation method, there is a case where a bias according to an unprivileged attribute, in addition to a bias according to a privileged attribute to be a fairness determination target is included in a calculated verification result, and there is a risk of impairing reliability of bias evaluation. For example, regarding a loan made by a financial institution, a case is considered where an annual income serves as a major determinant of the loan and there is a difference in a loan approval rate between black women and white men. Nevertheless, a typical bias evaluation device executes detection of a fairness issue using black people and women as the privileged attributes for the loan and compares the loan approval rate between a non-target group including white men and a black female group. In this case, if the fairness falls below a criterion, there is a possibility that the bias evaluation device erroneously determines that discrimination occurs according to the privileged attribute of black people and women.

The disclosed technology has been made in view of the above, and an object of the disclosed technology is to provide a bias evaluation program, a bias evaluation method, and a bias evaluation device that secure reliability of bias evaluation.

SOLUTION TO PROBLEM

In one aspect of a bias evaluation program, a bias evaluation method, and a bias evaluation device disclosed in the present application, a computer classifies a plurality of pieces of data into a plurality of groups, based on a first attribute of a plurality of attributes included in each of the plurality of pieces of data. Next, the computer compares a positive example rate of data included in a first group of the plurality of groups with a positive example rate of specific data in which a value of a second attribute of the plurality of attributes in data included in a second group of the plurality of groups is included in a range according to a distribution of the value of the second attribute of the data included in the first group. Next, the computer executes bias evaluation on data based on comparison between other groups other than the second group of the plurality of groups and the first group, based on a result of the comparing processing.

ADVANTAGEOUS EFFECTS OF INVENTION

In one aspect, the present invention can secure reliability of bias evaluation.

BRIEF DESCRIPTION OF DRAWINGS

FIG. 1 is a block diagram illustrating a bias evaluation device according to an embodiment.
FIG. 2 is a diagram illustrating an example of a privileged attribute.
FIG. 3 is a diagram illustrating an example of calculation of a DI value.
FIG. 4 is a diagram illustrating an influence of a bias according to an unprivileged attribute.
FIG. 5 is a diagram for explaining calculation of a ratio of the bias according to the unprivileged attribute.
FIG. 6 is a diagram illustrating a result of bias evaluation according to the embodiment.
FIG. 7 is a flowchart of fairness correction processing by the bias evaluation device according to the embodiment.
FIG. 8 is a hardware configuration diagram of the bias evaluation device.

DESCRIPTION OF EMBODIMENTS

Hereinafter, an embodiment of a bias evaluation program, a bias evaluation method, and a bias evaluation device disclosed in the present application will be described in detail with reference to the drawings. Note that the bias evaluation program, the bias evaluation method, and the bias evaluation device disclosed in the present application are not limited by the following embodiment.

[Embodiments]

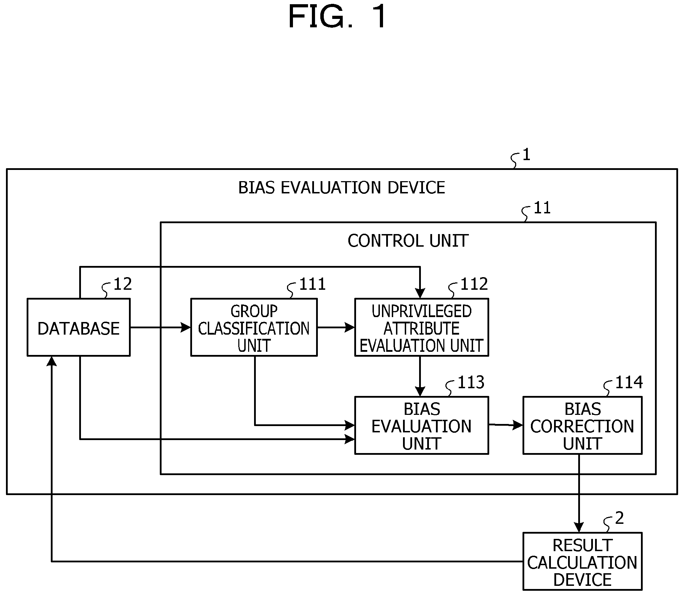

FIG. 1 is a block diagram illustrating a bias evaluation device according to an embodiment. A bias evaluation device 1 according to the present embodiment is coupled to a result calculation device 2.

Here, the result calculation device 2 is a device that calculates a determination result to be a target of bias evaluation. The result calculation device 2 includes, for example, a machine learning model. Then, the result calculation device 2 inputs information of a plurality of individuals to be a decision target into the machine learning model and obtains a determination result predicted for each individual as an output thereof. For example, in a case of home loan examination, the result calculation device 2 inputs information of a plurality of applicants of the home loan into the machine learning model and obtains an examination result for each applicant output from the machine learning model.

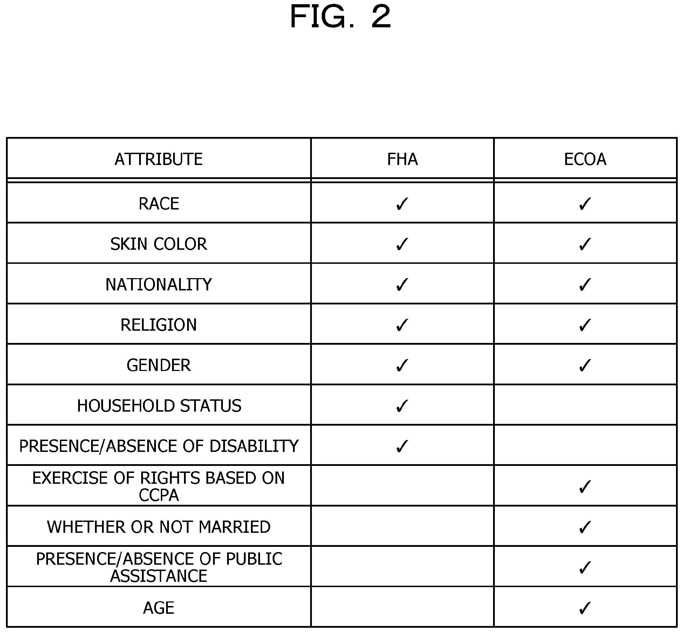

The bias evaluation device 1 executes bias evaluation regarding each privileged attribute designated for the determination result obtained by the result calculation device 2. FIG. 2 is a diagram illustrating an example of the privileged attribute. The Federal Housing Administration (FHA) is the Fair Housing Act of the United States. Furthermore, the Equal Credit Opportunity Act (ECOA) is a credit card anti-discrimination law. As illustrated in FIG. 2, attributes regarded as the privileged attribute include, a race, skin color, nationality, religion, gender, household status, presence/absence of disability, exercise of rights based on California Consumer Privacy Act (CCPA), whether or not married, presence/absence of public assistance, age, or the like. In FIG. 2, an attribute checked for each of the FHA and the ECOA is an attribute regarded as the privileged attribute, respectively. The bias evaluation device 1 may perform the bias evaluation on all the privileged attributes illustrated in FIG. 2 or may perform the bias evaluation only on some designated privileged attributes.

Returning to FIG. 1, the description is continued. As illustrated in FIG. 1, the bias evaluation device 1 includes a control unit 11 and a database 12.

The database 12 stores various types of data used for the bias evaluation. In the data stored in the database 12, the information regarding the plurality of individuals to be the decision target. The information regarding the individuals includes information regarding a privileged attribute, information regarding an unprivileged attribute, and a determination result for each individual to be the target of the bias evaluation.

The database 12 can acquire a prediction result output from the machine learning model in the result calculation device 2, as the determination result for each individual to be the target of the bias evaluation. The determination result is either one of a positive result that is a desired result or a negative result that is an undesired result.

As data to be the target of the bias evaluation included in the database 12, there are data of a result of employee employment, data of a loan result, data of a credit card examination result, data of persons who have passed an examination, and the like. For example, in a case of promotion to a company member, a decision to promote is the positive result, and a decision not to promote is the negative result. In addition, in a case of loans, an approval of the loan is the positive result, and a disapproval of the loan is the negative result. For example, in a case of prediction of the loans for persons A to Z, a positive result indicating that the loan is approved for each of the persons A to Z or a negative result indicating that the loan is disapproved for each of the persons A to Z is stored in the database 12, as the determination result.

The control unit 11 executes the bias evaluation using the data stored in the database 12. The control unit 11 includes a group classification unit 111, an unprivileged attribute evaluation unit 112, and a bias evaluation unit 113.

The group classification unit 111 holds the privileged attribute to be the target of the bias evaluation in advance. For example, the group classification unit 111 may receive, in advance, an input of the privileged attribute to be the target of the bias evaluation from a user of the bias evaluation device 1 and store the input privileged attribute. The group classification unit 111 may hold the single privileged attribute as the privileged attribute to be the target of the bias evaluation or may hold the plurality of privileged attributes. For example, there is a case where the group classification unit 111 holds the race and the gender, as the privileged attributes to be the target of the bias evaluation. A case where the number of privileged attributes to be the target of the bias evaluation is one is included in a case where the number of privileged attributes to be the target of the bias evaluation is plural. Therefore, in the following description, a case will be described where the number of privileged attributes to be the target of the bias evaluation is plural.

The group classification unit 111 acquires information regarding the privileged attribute of each person from the database 12. Next, the group classification unit 111 performs grouping for each combination of privileged attributes to be the target of the bias evaluation. For example, in a case where a black person and a white person exist as the race and a male and a female exist as the gender, if the race and the gender are the privileged attributes to be the target of the bias evaluation, the group classification unit 111 generates four groups including black women, black men, white women, and white men. Thereafter, the group classification unit 111 outputs a grouping result and information regarding a privileged group to the unprivileged attribute evaluation unit 112 and the bias evaluation unit 113.

Here, the bias evaluation will be described. In the present embodiment, as a fairness score to be an index of fairness, a Disparate Impact (DI) is adopted. A fairness score indicating fairness in a case where the Disparate Impact is used is referred to as a DI value. The DI value is a value obtained by dividing a positive rate of the privileged group by a positive rate of an unprivileged group. That is, the DI value is a ratio of ratios of positive determinations in the two groups including the privileged group and the unprivileged group. When the DI value is expressed by a formula, the DI value is expressed as the following formula (1).

[Expression 1]

$$\frac{P\left[\hat{Y} = 1 | S \neq 1\right]}{P\left[\hat{Y} = 1 | S = 1\right]} \geq 1 - \varepsilon \qquad \cdots (1)$$

Here, S = 1 is a privileged group. Furthermore, S ≠ 1 is an unprivileged group. Furthermore, Y ^ = 1 represents a case where the determination result is positive.

The DI value closer to one indicates fairer. In the United States, traditionally (partially legally), a DI value of less than 0.8 is regarded as problematic.

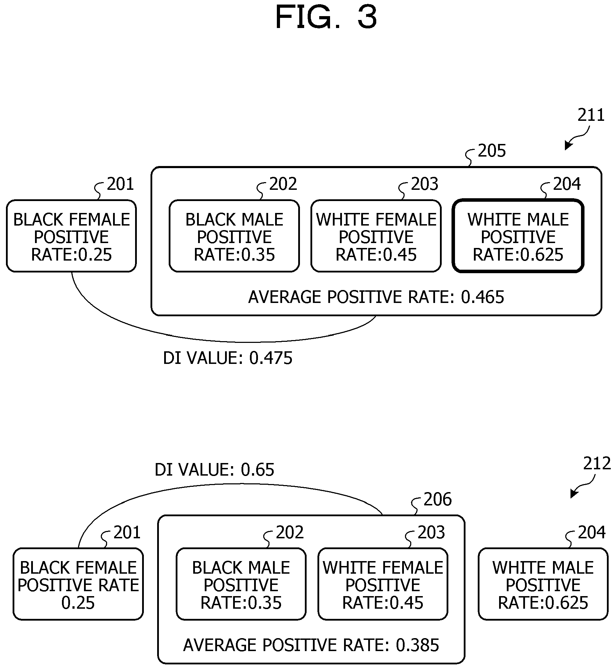

FIG. 3 is a diagram illustrating an example of calculation of the DI value. Here, a case will be described where the privileged attribute includes the race and the gender and there are four groups including a black female group 201, a black male group 202, a white female group 203, and a white male group 204. For example, for a certain decision, a positive rate at which the positive result is obtained for the black female group 201 is 0.25. Furthermore, for the similar decision, a positive rate of the black male group 202 is 0.35. Furthermore, for the similar decision, a positive rate of the white female group 203 is 0.45. Furthermore, for the similar decision, a positive rate of the white male group 204 is 0.625.

In this case, when the black female group 201 is set as the privileged group, as indicated by a group set 211, a group 205 including the black male group 202, the white female group 203, and the white male group 204 is another group. Then, in a case where other groups are collectively referred to as the unprivileged group, an average positive rate of the group 205, which is the unprivileged group, is calculated as 0.465. In this case, the DI value is 0.25/0.465 = 0.475. Here, if it is assumed that a bias is generated in a case where the DI value is less than 0.8, large unfairness occurs for black women in this decision.

However, it is considered that the bias according to the unprivileged attribute other than the privileged attribute greatly affects on a difference between the positive rates of the black female group 201 and the white male group 204. For example, in a case where this decision is the decision of the loan, there is a case where a difference according to the unprivileged attribute such as annual incomes between the black female group 201 and the white male group 204 accounts for a large proportion of the decision of the loan. In that case, it can be said that the white male group 204 is inappropriate as a comparison target when the fairness of the black female group 201 with respect to the privileged attribute such as the race or the gender is evaluated.

Therefore, for example, as indicated by a group set 212, in a case where a group 206 obtained by removing the white male group 204 from the group 205 is considered as the unprivileged group, an average positive rate of the group 206 is calculated as 0.385. In this case, the DI value is 0.25/0.385 = 0.65, and unfairness occurs for the black women in this decision. However, a rate of the unfairness is reduced as compared with a case where the white male group 204 is included in the unprivileged group. In this way, in a case where there is a group greatly affected by the bias according to the unprivileged attribute, incorporating the group into the bias evaluation according to the privileged attribute becomes an obstructive factor of appropriate bias evaluation, and validity of the bias evaluation is impaired. Therefore, the bias evaluation device 1 according to the present embodiment performs the following processing and performs the bias evaluation while excluding the influence of the bias according to the unprivileged attribute, so as to secure the validity and reliability of the bias evaluation.

Returning to FIG. 1, the description is continued. The unprivileged attribute evaluation unit 112 receives an input of the grouping result and the information regarding the privileged group, from the group classification unit 111. Next, the unprivileged attribute evaluation unit 112 selects a single determination target group from a group other than the privileged group.

Furthermore, the unprivileged attribute evaluation unit 112 includes information regarding a single or a plurality of unprivileged attributes to be determined, in advance. Then, the unprivileged attribute evaluation unit 112 selects one from among the unprivileged attributes to be determined.

Next, the unprivileged attribute evaluation unit 112 acquires information regarding the selected unprivileged attribute, for each person belonging to the privileged group, from the database 12. Furthermore, the unprivileged attribute evaluation unit 112 acquires information regarding the selected unprivileged attribute, for each person belonging to the determination target group, from the database 12.

Then, the unprivileged attribute evaluation unit 112 extracts an overlapping range of the privileged group and the determination target group, for the selected unprivileged attribute. It can be said that a DI value using the positive rate of each person of the privileged group in the overlapping range for the selected unprivileged attribute and the positive rate of each person of the determination target group is a correct DI value that is not affected by the bias of the selected unprivileged attribute.

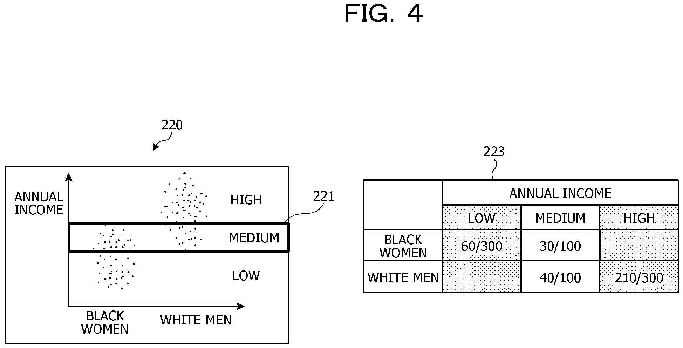

FIG. 4 is a diagram illustrating the influence of the bias according to the unprivileged attribute. For example, a case will be described where the annual income is selected as the unprivileged attribute, the privileged group is the black female group, and the determination target group is the white male group.

In a graph 220 in FIG. 4, the horizontal axis represents classification according to the privileged attribute, and the vertical axis represents an annual income that is the unprivileged attribute. That is, the graph 220 represents a distribution of annual incomes of the black women and the white men. The unprivileged attribute evaluation unit 112 extracts a range 221 where the annual income of the black woman and the annual income of the white men overlap. For example, the unprivileged attribute evaluation unit 122 extracts the range 221 where the annual income of the black women and the annual income of the white men overlap between a highest amount of the annual income of the black women and a lowest amount of the annual income of the white men. Here, it is preferable that the unprivileged attribute evaluation unit 122 extract the overlapping range 221, after determining an outlier and removing information determined as the outlier. Here, the annual income in the overlapping range 221 is assumed as a medium annual income, the annual income equal to or less than the range 221 is assumed as a low annual income, and the annual income equal to or more than the range 221 is assumed as a high annual income.

Next, the unprivileged attribute evaluation unit 112 acquires a determination result for each person in the privileged group and a determination result for each person in the determination target group, from the database 12. Then, the unprivileged attribute evaluation unit 112 calculates a positive rate of the privileged group and a positive rate of the determination target group in the overlapping range of the unprivileged attribute. Then, the unprivileged attribute evaluation unit 112 calculates the DI value of the privileged group and the determination target group in the overlapping range of the unprivileged attribute.

A table 223 in FIG. 4 illustrates positive rates according to the annual incomes of the privileged group and the determination target group. For example, as illustrated in the table 223, the unprivileged attribute evaluation unit 112 calculates a positive rate of the black female group as 30/100 and calculates a positive rate of the white male group as 40/100, having the medium annual income that is the overlapping range of the annual income. In this case, the unprivileged attribute evaluation unit 112 calculates a DI value of the black female group and the white male group in the overlapping range of the annual income as 0.75. The unprivileged attribute evaluation unit 112 can assume that this value is a correct DI value.

Moreover, the unprivileged attribute evaluation unit 112 calculates a DI value of the privileged group and the determination target group in an entire range of the selected unprivileged attribute. For example, in a case of the table 223 in FIG. 4, the unprivileged attribute evaluation unit 112 calculates the DI value of the black female group and the white male group in the entire range of the annual income as 0.36.

Next, the unprivileged attribute evaluation unit 112 subtracts the DI value of the privileged group and the determination target group in the entire range of the selected unprivileged attribute, from the DI value of the privileged group and the determination target group in the overlapping range of the unprivileged attribute and calculates a decrease amount of the DI value due to the unprivileged attribute. Then, the unprivileged attribute evaluation unit 112 calculates a decrease rate of the DI value, by dividing the decrease amount of the DI value due to the unprivileged attribute by the DI value of the privileged group and the determination target group in the overlapping range of the unprivileged attribute.

For example, a case of the table 223 in FIG. 4 will be described. The unprivileged attribute evaluation unit 112 divides 0.36 that is the DI value of the black female group and the white male group in the entire range of the annual income from 0.75 that is the DI value of the black female group and the white male group in the overlapping range of the annual income. As a result, the unprivileged attribute evaluation unit 112 calculates the decrease amount of the DI value due to the annual income as 0.75 - 0.36 = 0.39. Moreover, the unprivileged attribute evaluation unit 112 divides 0.39 that is the decrease amount of the DI value due to the annual income by 0.75 that is the DI value of the black female group and the white male group in the overlapping range of the annual income and calculate the decrease rate of the DI value by the annual income as 0.39/0.75 = 0.52.

The unprivileged attribute evaluation unit 112 calculates the decrease rate of the DI value similarly for another unprivileged attribute determined in advance for the privileged attribute group and the determination target group. Thereafter, the unprivileged attribute evaluation unit 112 calculates a sum of all the calculated decrease rates of the DI values of the unprivileged attributes and sets the sum as a ratio of the bias according to the unprivileged attribute in the determination target group. Thereafter, the unprivileged attribute evaluation unit 112 compares the calculated ratio of the bias according to the unprivileged attribute with a predetermined decrease rate threshold, and in a case where the ratio of the bias according to the unprivileged attribute exceeds the predetermined decrease rate threshold, the unprivileged attribute evaluation unit 112 determines to exclude the determination target group from the comparison target. On the other hand, in a case where the ratio of the bias according to the unprivileged attribute is equal to or less than the decrease rate threshold, the unprivileged attribute evaluation unit 112 determines to add the determination target group to the comparison target. Here, it is preferable that the decrease rate threshold be determined according to the number and types of the unprivileged attributes used as the determination targets.

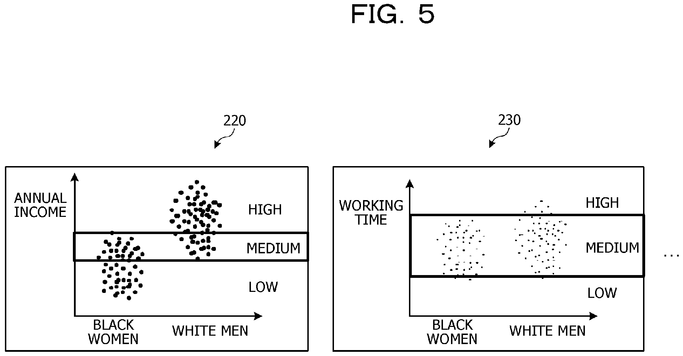

FIG. 5 is a diagram for explaining calculation of the ratio of the bias according to the unprivileged attribute. The unprivileged attribute evaluation unit 112 calculates a decrease rate P1 of the DI value due to the annual income, using the information regarding the annual incomes of the black women and the white men indicated in the graph 220. Furthermore, the unprivileged attribute evaluation unit 112 calculates a decrease rate P2 of the DI value due to a working time, using information regarding working times of the black women and the white men indicated in the graph 220. In this way, the unprivileged attribute evaluation unit 112 calculates decrease rates P1 to Pn of the DI value due to n unprivileged attributes including the annual income and the working time. Then, the unprivileged attribute evaluation unit 112 calculates a sum of the decrease rates P1 to Pn of the DI value and calculates a ratio of the bias of the unprivileged attribute in the white male group. That is, the unprivileged attribute evaluation unit 112 sets SUM (P1, P2,..., Pn) as the ratio of the bias of the unprivileged attribute in the white male group. Then, when the decrease rate threshold is set to t, in a case of SUM (P1, P2,..., Pn) > t, the unprivileged attribute evaluation unit 112 excludes the white male group from the comparison target.

The unprivileged attribute evaluation unit 112 selects one determination target group from among the groups other than the privileged group, repeats the determination of the exclusion from or addition to the above comparison target, and makes determination on all the groups other than the privileged group. Thereafter, the unprivileged attribute evaluation unit 112 outputs information regarding the group to be compared, other than the privileged group, to the bias evaluation unit 113. Conversely, the unprivileged attribute evaluation unit 112 may output information regarding the group excluded from the comparison target, to the bias evaluation unit 113.

The bias evaluation unit 113 receives an input of the grouping result and the information regarding the privileged group from the group classification unit 111. Moreover, the bias evaluation unit 113 receives an input of the information regarding the group to be compared, other than the privileged group, from the unprivileged attribute evaluation unit 112. Then, the bias evaluation unit 113 acquires information regarding each person belonging to the privileged group and information regarding each person belonging to the group to be compared, from the database 12.

Next, the bias evaluation unit 113 calculates the positive rate of the privileged group. Next, the bias evaluation unit 113 calculates the positive rate of the unprivileged group, as setting the group to be compared as the unprivileged group. Next, the bias evaluation unit 113 calculates the DI value by dividing the positive rate of the privileged group by the positive rate of the unprivileged group.

Here, the bias evaluation unit 113 has a fairness threshold used to determine whether or not the fairness is ensured using the calculated fairness score, in advance. For example, in a case where the DI value is used for the bias evaluation, the bias evaluation unit 113 may use 0.8 as the fairness threshold. The bias evaluation unit 113 compares the calculated DI value with the fairness threshold, and if the DI value is less than the fairness threshold, the bias evaluation unit 113 determines that a decision on the privileged group is not fair and there is a bias, for the privileged attribute to be the target of the bias evaluation. Conversely, if the DI value is equal to or more than the fairness threshold, the bias evaluation unit 113 determines that the decision on the privileged group is fair and there is no bias, for the privileged attribute to be the target of the bias evaluation.

Then, in a case of determining that the bias exists, the bias evaluation unit 113 notifies the bias correction unit 114 of the privileged attribute to be the target of the bias evaluation and the information regarding the privileged group, and the calculated DI value and the fairness threshold.

The bias correction unit 114 receives a notification of the privileged attribute to be the target of the bias evaluation and the information regarding the privileged group, and the calculated DI value and the fairness threshold, from the bias evaluation unit 113. Next, the bias correction unit 114 improves the fairness so that the DI value of the privileged group is equal to or more than the fairness threshold, for the privileged attribute to be the target of the bias evaluation.

For example, the bias correction unit 114 improves the fairness by correcting a dataset before training, correcting processing in a machine learning algorithm such as correction of a parameter of the machine learning model, correcting an output result from the machine learning model, or the like.

Improvement in the fairness by correcting a dataset before training will be described. For example, the bias correction unit 114 changes or re-measures an instance label of training data, so that a label of a sample closer to a decision boundary is changed. In addition, the bias correction unit 114 changes a feature representation of the instance so that subsequent classifiers become fairer. In this case, for example, the bias correction unit 114 changes training data so that classifications of a privileged group and an unprivileged group are similar to each other. Alternatively, the bias correction unit 114 changes the training data so that it is difficult to estimate a sensitive attribute by adversarial training. The bias correction unit 114 can use a method for improving the fairness by correcting the dataset before training without limitation of a classification algorithm. Furthermore, the bias correction unit 114 can cope with a case where a clear selection bias exists in data, by using the method for improving the fairness by correcting the dataset before training.

Next, the correction of the processing in the machine learning algorithm will be described. In a case of the improvement in the fairness by correcting the processing in the machine learning algorithm, a mechanism to be improved and the machine learning algorithm are closely related to each other. Therefore, the bias correction unit 114 can use the method for improving the fairness by correcting the processing in the machine learning algorithm, for a specific machine learning algorithm. However, by using the method for improving the fairness by correcting the processing in the machine learning algorithm, the bias correction unit 114 can explicitly handle a trade-off relationship between prediction accuracy by the machine learning model and the fairness.

Next, the correction of the output result from the machine learning model will be described. For example, the bias correction unit 114 inverts an output result from the machine learning model in consideration of the given fairness score. In addition, the bias correction unit 114 can perform correction of the output result from the machine learning model, by performing retraining using samples outside the group in combination of transfer training. Furthermore, the bias correction unit 114 can use the method for improving the fairness by correcting the output result from the machine learning model without the limitation of the classification algorithm.

In this way, by performing correction of the fairness by the bias correction unit 114, the result calculation device 2 can acquire the determination result of which the fairness is ensured. For example, in a case of the correction of the dataset before training or the correction of the fairness by correcting the processing in the machine learning algorithm, the result calculation device 2 acquires an output from the machine learning model obtained by inputting information including an attribute of each person, as the determination result of which the fairness is ensured. Furthermore, in a case of the correction of the output result from the machine learning model, the result calculation device 2 acquires a determination result obtained by adding correction to the determination result output from the machine learning model obtained by inputting the information including the attribute of each person, as the determination result of which the fairness is ensured.

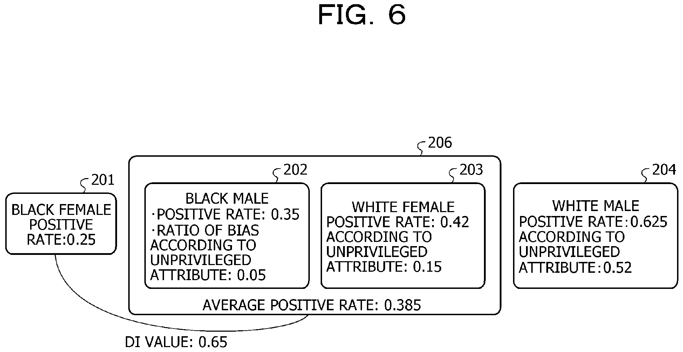

FIG. 6 is a diagram illustrating a result of the bias evaluation according to the embodiment. Here, the bias evaluation according to the embodiment will be collectively described again, with reference to FIG. 6.

The unprivileged attribute evaluation unit 112 calculates a ratio of an unprivileged attribute bias of the black male group 202 in a case where the black female group 201 is set as the privileged group, as 0.05. Furthermore, the unprivileged attribute evaluation unit 112 calculates a ratio of an unprivileged attribute bias of the white female group 203 in a case where the black female group 201 is set as the privileged group, as 0.15. Furthermore, the unprivileged attribute evaluation unit 112 calculates a ratio of an unprivileged attribute bias of the white male group 204 in a case where the black female group 201 is set as the privileged group, as 0.52. For example, in a case where the decrease rate threshold is 20, the unprivileged attribute evaluation unit 112 excludes the white male group 204 from the comparison target and adds the black male group 202 and the white female group 203 to the comparison target.

The bias evaluation unit 113 combines the black male group 202 and the white female group 203 set as the comparison target by the unprivileged attribute evaluation unit 112, into a group 206. Then, the bias evaluation unit 113 sets an unprivileged group for the black female group 201 that is the privileged group, in a case where the bias evaluation is performed using the gender and the race as the privileged attributes, as the group 206. Thereafter, the bias evaluation unit 113 calculates the positive rate of the black female group 201 as 0.25. Furthermore, the bias evaluation unit 113 calculates the positive rate of the black male group 202 as 0.35, calculates the positive rate of the white female group 203 as 0.15, and obtains an average positive rate of these and sets a positive rate of the group 206 as 0.385. Then, the bias evaluation unit 113 calculates a DI value of the black female group 201 in a case where the gender and the race are set as the privileged attributes, as 0.65, from the positive rate of the black female group 201 and the positive rate of the group 206.

In this case, since the DI value is less than 0.8 and this is an unfair state, the bias correction unit 114 improves the fairness, so that the DI value is equal to or more than 0.8.

Incidentally, in this case, since the positive rate of the white men is 0.625, when the bias evaluation is performed as adding the white male group 204 to the privileged group, the DI value greatly decreases, and as a result, the bias correction unit 114 performs correction of the fairness more than necessary. Therefore, conversely, there is a possibility that unfairness occurs in the determination result after the correction of the fairness.

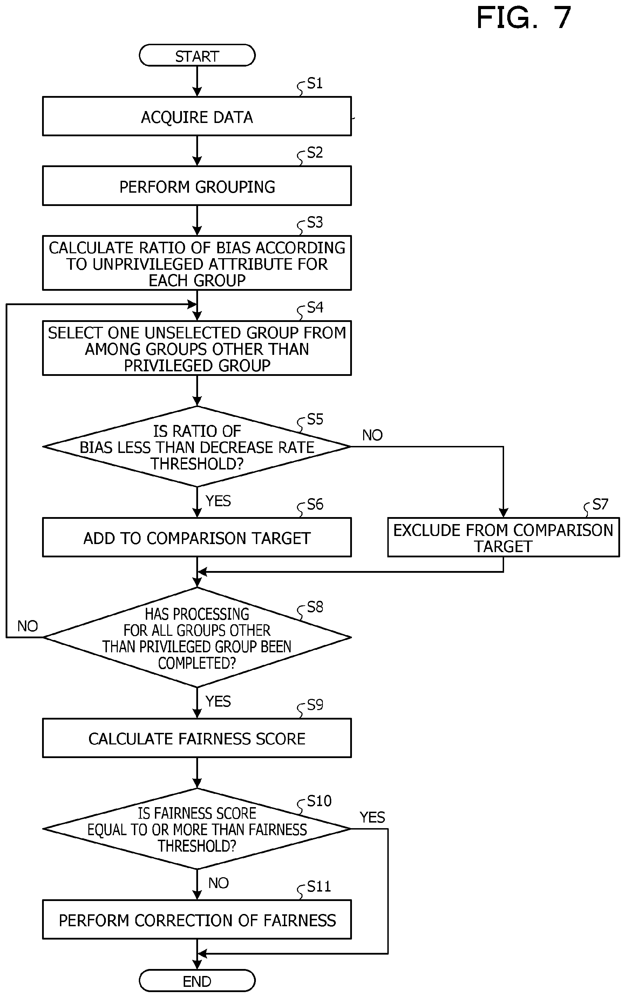

FIG. 7 is a flowchart of fairness correction processing by the bias evaluation device according to the embodiment. Next, a flow of the fairness correction processing by the bias evaluation device 1 according to the embodiment will be described with reference to FIG. 7.

The group classification unit 111 acquires data to be a target of bias evaluation from the database 12 (step S1).

Next, the group classification unit 111 acquires information regarding each person for the privileged attribute to be the target of the bias evaluation, from the acquired data. Then, the group classification unit 111 performs grouping, based on the acquired information regarding the privileged attribute of each person (step S2).

The unprivileged attribute evaluation unit 112 extracts an overlapping range of each group generated by the group classification unit 111, with the privileged group for each unprivileged attribute. Then, the unprivileged attribute evaluation unit 112 obtains a DI value of the privileged group and the determination target group in the overlapping range of the unprivileged attribute and a DI value of the privileged group and the determination target group in the entire range of the unprivileged attribute, and calculates a decrease rate of the DI value of the determination target group for each unprivileged attribute. Next, the unprivileged attribute evaluation unit 112 calculates a ratio of the bias that is a sum of the decrease rate of the DI value for each unprivileged attribute, for each group (step S3).

Next, the unprivileged attribute evaluation unit 112 selects one unselected group from among groups other than the privileged group (step S4).

Next, the unprivileged attribute evaluation unit 112 determines whether or not a ratio of a bias of the selected group is less than a decrease rate threshold (step S5).

In a case where the ratio of the bias is less than the decrease rate threshold (step S5: Yes), the unprivileged attribute evaluation unit 112 adds the selected group to a comparison target (step S6).

On the other hand, in a case where the ratio of the bias exceeds the decrease rate threshold (step S5: No), the unprivileged attribute evaluation unit 112 excludes the selected group from the comparison target (step S7).

Thereafter, the unprivileged attribute evaluation unit 112 determines whether or not determination processing as to whether or not all the groups other than the privileged group are set as the comparison targets has been completed (step S8). In a case where a group on which the determination processing as to whether or not to be set as the comparison target has not been performed remains (step S8: No), the fairness correction processing returns to step S4.

On the other hand, in a case where the determination processing as to whether or not all the groups other than the privileged group are set as the comparison targets has been completed (step S8: Yes), the unprivileged attribute evaluation unit 112 notifies the bias evaluation unit 113 of information regarding the group to be compared. The bias evaluation unit 113 calculates a fairness score between a protection target group and a non-protection target group, as collectively setting the groups to be compared as the non-protection target group (step S9)

The bias correction unit 114 determines whether or not the fairness score calculated by the bias evaluation unit 113 is equal to or more than the fairness threshold (step S10). In a case where the fairness score is equal to or more than the fairness threshold (step S10: Yes), the bias correction unit 114 ends the fairness correction processing. In this case, since the fairness is ensured in the determination result that has been already obtained, the result calculation device 2 sets the determination result that has been already obtained as a final result.

On the other hand, in a case where the fairness score is less than the fairness threshold (step S10: No), the bias correction unit 114 performs correction of the fairness (step S11). In this case, the result calculation device 2 obtains a newly corrected determination result using corrected training data, a corrected machine learning model, or the like, as a final result.

As described above, the bias evaluation device according to the present embodiment performs the bias evaluation while excluding a group greatly affected by the unprivileged attribute, in the calculation of the fairness score. As a result, it is possible to avoid that the result of the bias according to the unprivileged attribute is erroneously detected as the bias in the privileged attribute and to perform correct bias evaluation regarding the privileged attribute. Therefore, the reliability of the bias evaluation can be secured.

Furthermore, in the above, a case has been described where the DI value is used as the fairness score. However, the bias evaluation device 1 can perform the bias evaluation using other fairness scores.

For example, the bias evaluation device 1 can use Demographic (Statistical) party obtained by the following formula (2), as the fairness score.
[Expression 2]

$$\left| P\left[\hat{Y} = 1 | S = 1\right] - P\left[\hat{Y} = 1 | S \neq 1\right] \right| \leq \varepsilon \qquad \cdots (2)$$

Here, S = 1 is a privileged group. Furthermore, S ≠ 1 is an unprivileged group. Moreover, Y ^ = 1 represents that prediction is positive.

That is, a fairness score using the Demographic party indicates a difference between ratios at which it is determined to be positive in two groups. As a numerical value of the fairness score using the Demographic party is lower, this indicates fairer. The fairness score using the Demographic party ensures demographic equivalence. However, when one of the Disparate Impact and the Demographic parity is used, in a case where an actual positive example rate greatly differs, there is a possibility that the bias evaluation device 1 determines that "true correct determination" is unfair.

In addition, the bias evaluation device 1 can use Equalized odds obtained by the following formula (3) as the fairness score.
[Expression 3]

$$\left| P\left[\hat{Y} = 1 | S = 1, Y = 0\right] - P\left[\hat{Y} = 1 | S \neq 1, Y = 0\right] \right| \leq \varepsilon$$
$$\left| P\left[\hat{Y} = 1 | S = 1, Y = 1\right] - P\left[\hat{Y} = 1 | S \neq 1, Y = 1\right] \right| \leq \varepsilon \qquad \cdots (3)$$

Here, S = 1 is a privileged group. Furthermore, S ≠ 1 is an unprivileged group. Moreover, Y = 1 represents that a pre-prediction label is positive, and Y = 0 represents that the pre-prediction label is negative. Furthermore, Y ^ = 1 represents that prediction is positive, and Y ^ = 0 represents that the prediction is negative.

That is, the fairness score using the Equalized odd indicates a difference in False Positive Rates (FPR) and a difference in True Positive Rates (TPR). The output of the machine learning model is used to calculate the fairness score using the Equalized odd. The "true correct determination" satisfies a condition of the Equalized odd expressed by the formula (3).

In addition, the bias evaluation device 1 can use Equalized opportunity obtained by the following formula (4), as the fairness score.
[Expression 4]

$$\left| P\left[\hat{Y} = 1 | S = 1, Y = 1\right] - P\left[\hat{Y} = 1 | S \neq 1, Y = 1\right] \right| \leq \varepsilon \qquad \cdots (4)$$

Here, S = 1 is a privileged group. Furthermore, S ≠ 1 is an unprivileged group. Moreover, Y = 1 represents that the pre-prediction label is positive. Furthermore, Y ^ = 1 represents that the prediction is positive.

That is, the fairness score using the Equalized opportunity is an index focusing on the TPR in a case where Y = 1 in the Equalized odd. Since there is a case where the Equalized opportunity focuses on the TPR due to practical reasons, the Equalized opportunity is tentatively distinguished from the Equalized odd. For the calculation of the fairness score using the Equalized opportunity, similarly to the calculation of the fairness score using the Equalized odd, the output of the machine learning model is used.

In addition, the bias evaluation device 1 can use Individual fairness obtained by the following formula (5) as the fairness score.
[Expression 5]

$$\left| P\left(\hat{Y}^{(i)} = y \middle| X^{(i)}, S^{(i)}\right) - P\left(\hat{Y}^{(j)} = y \middle| X^{(j)}, S^{(j)}\right) \right| \leq \varepsilon; if\, d(i,j) \approx 0 \quad \cdots (5)$$

Here, S is a sensitive attribute. Furthermore, Y ^ is a prediction label. Furthermore, i and j are indexes of instances. Furthermore, d (i, j) is an arbitrary similarity Measure.

That is, the fairness score using the Individual fairness is an index called "individual fairness" for the purpose of treating similar instances in the same way. On the other hand, the Disparate Impact, the Demographic parity, the Equalized odds, and the Equalized opportunity are called "group fairness" for the purpose of matching specific indexes between different groups.

As described above, the bias evaluation device 1 can use various fairness indexes. However, each of the various fairness indexes has advantages and disadvantages. Furthermore, the fairness and accuracy basically have a trade-off relationship. Moreover, existing studies suggest that it is difficult to satisfy the plurality of fairness indexes at the same time. Therefore, it is preferable to determine which fairness index is used to calculate the fairness score by the bias evaluation device 1, in consideration of legal, ethical, and various social situations.

(Hardware Configuration)

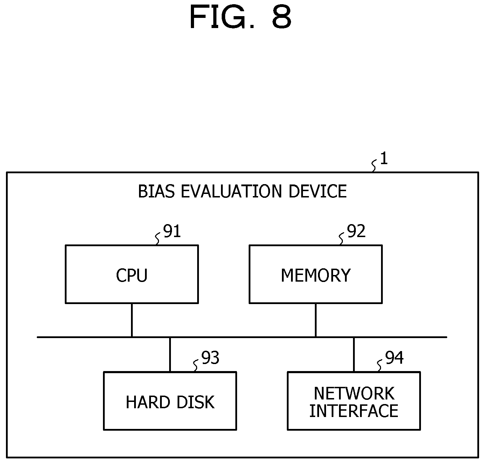

FIG. 8 is a hardware configuration diagram of the bias evaluation device. Next, a hardware configuration of the bias evaluation device 1 will be described, with reference to FIG. 8.

For example, as illustrated in FIG. 8, the bias evaluation device 1 includes a Central Processing Unit (CPU) 91, a memory 92, a hard disk 93, and a network interface 94. The CPU 91 is coupled to the memory 92, the hard disk 93, and the network interface 94 via a bus.

The network interface 94 is an interface for communication between the bias evaluation device 1 and an external device. For example, the network interface 94 relays communication between the CPU 91 and the result calculation device 2.

The hard disk 93 is an auxiliary storage device. The hard disk 93 implements functions of the database 12 illustrated in FIG. 1, for example. Furthermore, the hard disk 93 stores various programs including a program for implementing functions of a control unit 101 including the group classification unit 111, the unprivileged attribute evaluation unit 112, the bias evaluation unit 113, and the bias correction unit 114, illustrated in FIG. 1.

The memory 92 is a main storage device. For example, a Dynamic Random Access Memory (DRAM) may be used as the memory 92.

The CPU 91 reads various programs stored in the hard disk 93, develops the programs in the memory 92, and executes the programs. As a result, the CPU 91 implements the functions of the control unit 11 including the group classification unit 111, the unprivileged attribute evaluation unit 112, the bias evaluation unit 113, and the bias correction unit 114, illustrated in FIG. 1.

CITATION LIST

PATENT DOCUMENT

Patent Document 1: U.S. Patent Application Publication No. 2021/0406712

REFERENCE SIGNS LIST

1 Bias evaluation device
2 Result calculation device
11 Control unit
12 Database
111 Group classification unit
112 Unprivileged attribute evaluation unit
113 Bias evaluation unit
114 Bias correction unit

**EP 4 583 015 A1**

**Claims**

1. A bias evaluation program comprising instructions which, when executed by a computer, cause the computer to execute processing comprising:

   classifying a plurality of pieces of data into a plurality of groups, based on a first attribute of a plurality of attributes included in each of the plurality of pieces of data;
   comparing a positive example rate of data included in a first group of the plurality of groups with a positive example rate of specific data in which a value of a second attribute of the plurality of attributes in data included in a second group of the plurality of groups is included in a range according to a distribution of the value of the second attribute of the data included in the first group; and
   executing bias evaluation on data based on comparison between other groups other than the second group of the plurality of groups and the first group, based on a result of the comparing processing.

2. The bias evaluation program according to claim 1, wherein

   the comparing processing includes processing of
   calculating a first fairness score, based on the positive example rate of the specific data included in the second group and the positive example rate of the data in which the second attribute is included in the range, in the data included in the first group,
   calculating a second fairness score, based on a positive example rate of all data included in the first group and a positive example rate of all data included in the second group, and
   comparing the first fairness score and the second fairness score.

3. The bias evaluation program according to claim 1, wherein

   a plurality of types of attributes is included in the second attribute,
   the comparing processing is executed in each of the plurality of pieces of processing, and
   processing of the bias evaluation is executed, based on a unified result obtained by integrating a result of the comparing processing of each of the plurality of types.

4. The bias evaluation program according to claim 1, for causing the computer to execute processing further comprising:
   correcting the plurality of pieces of data, based on a result of the bias evaluation.

5. A bias evaluation method implemented by a computer, the bias evaluation method comprising:

   classifying a plurality of pieces of data into a plurality of groups, based on a first attribute of a plurality of attributes included in each of the plurality of pieces of data;
   comparing a positive example rate of data included in a first group of the plurality of groups with a positive example rate of specific data in which a value of a second attribute of the plurality of attributes in data included in a second group of the plurality of groups is included in a range according to a distribution of the value of the second attribute of the data included in the first group; and
   executing bias evaluation on data based on comparison between other groups other than the second group of the plurality of groups and the first group, based on a result of the comparing processing.

6. A bias evaluation apparatus comprising a control unit configured to perform processing including:

   classifying a plurality of pieces of data into a plurality of groups, based on a first attribute of a plurality of attributes included in each of the plurality of pieces of data;
   comparing a positive example rate of data included in a first group of the plurality of groups with a positive example rate of specific data in which a value of a second attribute of the plurality of attributes in data included in a second group of the plurality of groups is included in a range according to a distribution of the value of the second attribute of the data included in the first group; and
   executing bias evaluation on data based on comparison between other groups other than the second group of the plurality of groups and the first group, based on a result of the comparing processing.

# FIG. 1

# FIG. 2

| ATTRIBUTE | FHA | ECOA |
|---|---|---|
| RACE | ✓ | ✓ |
| SKIN COLOR | ✓ | ✓ |
| NATIONALITY | ✓ | ✓ |
| RELIGION | ✓ | ✓ |
| GENDER | ✓ | ✓ |
| HOUSEHOLD STATUS | ✓ | |
| PRESENCE/ABSENCE OF DISABILITY | ✓ | |
| EXERCISE OF RIGHTS BASED ON CCPA | | ✓ |
| WHETHER OR NOT MARRIED | | ✓ |
| PRESENCE/ABSENCE OF PUBLIC ASSISTANCE | | ✓ |
| AGE | | ✓ |

# FIG. 3

211

205

201

**BLACK FEMALE POSITIVE RATE:0.25**

202

**BLACK MALE POSITIVE RATE:0.35**

203

**WHITE FEMALE POSITIVE RATE:0.45**

204

**WHITE MALE POSITIVE RATE:0.625**

AVERAGE POSITIVE RATE: 0.465

DI VALUE: 0.475

DI VALUE: 0.65

212

206

201

**BLACK FEMALE POSITIVE RATE 0.25**

202

**BLACK MALE POSITIVE RATE:0.35**

203

**WHITE FEMALE POSITIVE RATE:0.45**

204

**WHITE MALE POSITIVE RATE:0.625**

AVERAGE POSITIVE RATE: 0.385

# FIG. 4

| | ANNUAL INCOME | | |
|---|---|---|---|
| | LOW | MEDIUM | HIGH |
| BLACK WOMEN | 60/300 | 30/100 | |
| WHITE MEN | | 40/100 | 210/300 |

# FIG. 5

# FIG. 6

BLACK FEMALE POSITIVE RATE:0.25 — 201

206

BLACK MALE
·POSITIVE RATE: 0.35
·RATIO OF BIAS
ACCORDING TO
UNPRIVILEGED
ATTRIBUTE: 0.05 — 202

WHITE FEMALE
POSITIVE RATE: 0.42
ACCORDING TO
UNPRIVILEGED
ATTRIBUTE: 0.15 — 203

WHITE MALE
POSITIVE RATE:0.625
ACCORDING TO
UNPRIVILEGED
ATTRIBUTE:0.52 — 204

AVERAGE POSITIVE RATE: 0.385

DI VALUE: 0.65

FIG. 7

```
                    ┌─────────────┐
                    │    START    │
                    └──────┬──────┘
                           │                    ⌐S1
              ┌────────────▼────────────┐
              │      ACQUIRE DATA        │
              └────────────┬────────────┘
                           │                    ⌐S2
              ┌────────────▼────────────┐
              │     PERFORM GROUPING     │
              └────────────┬────────────┘
                           │                    ⌐S3
              ┌────────────▼────────────┐
              │ CALCULATE RATIO OF BIAS  │
              │ ACCORDING TO UNPRIVILEGED│
              │ ATTRIBUTE FOR EACH GROUP │
              └────────────┬────────────┘
                           │                    ⌐S4
              ┌────────────▼────────────┐
              │ SELECT ONE UNSELECTED    │
    ┌────────▶│ GROUP FROM AMONG GROUPS  │
    │         │ OTHER THAN PRIVILEGED    │
    │         │ GROUP                    │
    │         └────────────┬────────────┘
    │                      │              ⌐S5
    │                    ◇─▼─◇
    │          ╱  IS RATIO OF BIAS  ╲  NO
    │         ◇ LESS THAN DECREASE  ◇──────────┐
    │          ╲ RATE THRESHOLD?   ╱           │
    │                ◇─┬─◇                     │
    │              YES │        ⌐S6            │ ⌐S7
    │         ┌────────▼────────┐    ┌─────────▼─────────┐
    │         │ ADD TO          │    │ EXCLUDE FROM      │
    │         │ COMPARISON      │    │ COMPARISON TARGET │
    │         │ TARGET          │    │                   │
    │         └────────┬────────┘    └─────────┬─────────┘
    │                  │◀───────────────────────┘
    │                  │              ⌐S8
    │                ◇─▼─◇
    │ NO   ╱ HAS PROCESSING FOR ALL ╲
    └─────◇  GROUPS OTHER THAN       ◇
          ╲ PRIVILEGED GROUP BEEN   ╱
           ╲    COMPLETED?        ╱
                ◇─┬─◇
              YES │              ⌐S9
         ┌────────▼────────┐
         │ CALCULATE       │
         │ FAIRNESS SCORE  │
         └────────┬────────┘
                  │              ⌐S10
                ◇─▼─◇
       ╱ IS FAIRNESS SCORE EQUAL ╲  YES
      ◇ TO OR MORE THAN FAIRNESS  ◇──────┐
       ╲    THRESHOLD?          ╱        │
              ◇─┬─◇                      │
             NO │        ⌐S11            │
      ┌─────────▼─────────┐              │
      │ PERFORM           │              │
      │ CORRECTION OF     │              │
      │ FAIRNESS          │              │
      └─────────┬─────────┘              │
                │◀──────────────────────┘
         ┌──────▼──────┐
         │     END     │
         └─────────────┘
```

# FIG. 8

BIAS EVALUATION DEVICE — 1

CPU — 91

MEMORY — 92

HARD DISK — 93

NETWORK INTERFACE — 94

## INTERNATIONAL SEARCH REPORT

| International application No. |
|---|
| **PCT/JP2022/032665** |

**A. CLASSIFICATION OF SUBJECT MATTER**

*G06N 20/00*(2019.01)i
FI:  G06N20/00

According to International Patent Classification (IPC) or to both national classification and IPC

**B. FIELDS SEARCHED**

Minimum documentation searched (classification system followed by classification symbols)

G06N20/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/044064 A1 (FUJITSU LTD) 03 March 2022 (2022-03-03)<br>entire text, all drawings | 1-6 |
| A | JP 2022-510142 A (INTERNATIONAL BUSINESS MACHINES CORPORATION) 26 January 2022 (2022-01-26)<br>entire text, all drawings | 1-6 |
| A | US 2021/0158204 A1 (INTERNATIONAL BUSINESS MACHINES CORPORATION) 27 May 2021 (2021-05-27)<br>entire text, all drawings | 1-6 |
| A | US 2021/0406712 A1 (INTERNATIONAL BUSINESS MACHINES CORPORATION) 30 December 2021 (2021-12-30)<br>entire text, all drawings | 1-6 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 November 2022** | **29 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/032665**

| Patent document cited in search report | | | Publication date (day/month/year) | Patent family member(s) | | | Publication date (day/month/year) |
|---|---|---|---|---|---|---|---|
| WO | 2022/044064 | A1 | 03 March 2022 | (Family: none) | | | |
| JP | 2022-510142 | A | 26 January 2022 | US | 2020/0184350 | A1 | |
| | | | | entire text, all drawings | | | |
| | | | | WO | 2020/121104 | A1 | |
| | | | | CN | 113168401 | A | |
| US | 2021/0158204 | A1 | 27 May 2021 | (Family: none) | | | |
| US | 2021/0406712 | A1 | 30 December 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20210406712